**Europäisches Patentamt**

**European Patent Office**

**Office européen des brevets**

(19)

(11) Numéro de publication: **0 093 677**
**B1**

(12) # FASCICULE DE BREVET EUROPEEN

(45) Date de publication du fascicule du brevet:
**06.08.86**

(51) Int. Cl.⁴: **B 01 D 13/01, A 61 M 1/18**

(21) Numéro de dépôt: **83420049.5**

(22) Date de dépôt: **21.03.83**

(54) **Appareil à fibres creuses.**

(30) Priorité: **27.04.82 FR 8207376**

(43) Date de publication de la demande:
**09.11.83 Bulletin 83/45**

(45) Mention de la délivrance du brevet:
**06.08.86 Bulletin 86/32**

(84) Etats contractants désignés:
**BE CH DE GB IT LI NL SE**

(56) Documents cités:
**DE - A - 2 304 839**
**FR - A - 2 111 382**
**FR - A - 2 126 208**
**FR - A - 2 242 129**
**FR - A - 2 380 362**

(73) Titulaire: **HOSPAL INDUSTRIE, 7, Avenue Lionel Terray, F-69330 Meyzieu (FR)**

(72) Inventeur: **Robert, Marc, 45, rue de la Cadière, F-69350 La Mulatiere (FR)**

(74) Mandataire: **Gauckler, Jacques et al, Service Brevets HOSPAL HOSPAL C.O.T. B.P. 21, F-69881 Meyzieu Cedex (FR)**

ACTORUM AG

## Description

La présente invention concerne un appareil à fibres creuses, notamment pour le traitement du sang, ainsi qu'un faisceau de fibres creuses utilisable pour un tel appareil, un procédé de fabrication d'un tel faisceau de fibres creuses et un appareillage permettant de mettre en œuvre ce procédé. Les fibres creuses ne sont ici qu'une forme particulière de membrane permettant des échanges entre deux fluides, dont l'un est notamment le sang. De tels appareils sont généralement utilisés comme hémodialyseurs ou oxygénateurs de sang, mais aussi comme ultrafiltres, hémofiltres ou appareils de plasmaphérèse.

Pour plus de commodité, il sera fait par la suite référence essentiellement à un hémodialyseur.

On connaît déjà de nombreux hémodialyseurs constitués essentiellement par un faisceau de fibres creuses parcourues intérieurement par le sang. Un problème essentiel est d'obtenir des échanges efficaces entre le sang et le liquide de dialyse. Ceci nécessite notamment un écoulement actif et uniformément réparti du liquide de dialyse autour des fibres creuses.

Une répartition des fibres creuses laissée au hasard conduit généralement à des passages préférentiels du liquide de dialyse et à une chute d'efficacité généralement inacceptable. Aussi a-t-on assemblé des fibres creuses sensiblement parallèles en nattes que l'on a ensuite roulées sur elles-même, mais ceci entraîne une série d'opérations délicates et de lourds investissements.

Pour tourner la difficulté, on a formé des faisceaux constitués de fibres entrecroisées, comme décrit dans le FR-A 2 380 362. D'une part on a ainsi constitué des faisceaux de couches de fibres faiblement entrecroisées, disposées les unes sur les autres. On obtient ainsi une structure stratifiée, isotrope, en particulier par rapport à l'emplacement des orifices d'entrée et de sortie de liquide de dialyse, ce qui n'est pas entièrement satisfaisant.

D'autre part, comme décrit dans le FR-A 2 242 129, on a constitué des faisceaux de couches de fibres fortement entrecroisées, roulées en spirale autour d'elles-même, mais ceci implique de disposer de fibres creuses molles et pratiquement dépourvues d'élasticité pour accepter d'être ainsi roulées en spirale sans se désolidariser.

En outre, dans le FR-A 2 111 382, on décrit un appareil séparateur de fluides qui nécessite la mise en œuvre d'un tissu autour duquel on replie les fibres creuses qui ne doivent pas s'obturer à la pliure.

Par ailleurs, le DE-A 2 304 839 décrit un procédé de fabrication de nappes de fibres creuses entrecroisées. Mais ces nappes sont empilées en blocs parallélépipédiques qui ne pourraient pas remplir avec une densité uniforme une enveloppe généralement cylindrique.

Aussi le problème reste posé d'obtenir d'une manière simple et économique une structure à fibres creuses qui permette des échanges efficaces entre deux fluides circulant respectivement à l'intérieur et à l'extérieur des fibres creuses, tout particulièrement lorsque les fibres creuses risquent de s'obturer par pliage.

La présente invention a pour but de proposer un nouvel appareil de traitement de sang constitué essentiellement par un faisceau de fibres creuses qui ne présente pas les inconvénients observés jusqu'à présent.

Elle a notamment pour but un appareil composé de fibres creuses offrant des caractéristiques mécaniques moyennes, notamment sur le plan de l'élasticité.

Elle a plus précisément pour but un appareil dont l'efficacité soit améliorée, tant sur le plan du niveau des performances que sur celui de la régularité des performances obtenues.

Elle a également pour but un appareil comprenant un faisceau de fibres creuses dont le procédé de fabrication soit simple, fiable et économique.

D'autres avantages de la présente invention apparaîtront au cours de la description qui va suivre.

Il a maintenant été trouvé et ceci fait l'objet de la présente invention, à la réalisation de laquelle a participé, Mr Marc Robert, un appareil, notamment pour le traitement de sang, comportant à l'intérieur d'une enveloppe allongée munie d'orifices d'entrée et de sortie pour le sang et pour un fluide auxiliaire, au moins un faisceau de fibres creuses sélectivement perméables, sensiblement rectilignes, ouvertes à leurs extrémités, scellées de manière étanche vers chacune de leurs extrémités dans des zones délimitant à l'intérieur de ladite enveloppe un compartiment central parcouru à l'extérieur des fibres creuses par ledit fluide auxiliaire et deux compartiments latéraux reliés entre eux par les fibres creuses parcourues intérieurement par le sang, ledit faisceau étant constitué seulement de fibres creuses entrecroisées entre elles, à l'intérieur d'une nappe roulée en spirale sur elle-même autour d'un axe longitudinal, caractérisé en ce que lesdites fibres creuses sont entrecroisées, selon des angles alpha compris dans l'intervalle ouvert: 1°–5° par rapport audit axe longitudinal.

La présente invention porte également sur la structure du faisceau de fibres creuses équipant un tel appareil, ainsi que sur un procédé de fabrication d'un tel faisceau et sur l'appareillage permettant de mettre en œuvre ce procédé.

La compréhension de l'invention sera facilitée par les figures ci-jointes qui représentent schématiquement et sans échelle déterminée divers aspects d'exemples de réalisation.

La fig. 1 est la vue schématique en coupe partielle d'un hémodialyseur selon l'invention.

La fig. 2 est une vue schématique d'une partie des moyens mis en œuvre pour la fabrication de faisceaux de fibres creuses selon la présente invention.

La fig. 3 est une vue en plan d'une plaque support (44) sur laquelle sont disposées les couches successives de fibres creuses entrecroisées, torsadées sur elles-mêmes, selon un mode de réalisation particulier de la présente invention.

La fig. 4 est une vue de gauche schématique en coupe selon IV–IV de la fig. 3.

La fig. 5 est une vue en perspective d'un mode de réalisation particulier du faisceau de fibres creuses selon l'invention, en cours de mise sous forme spiralée.

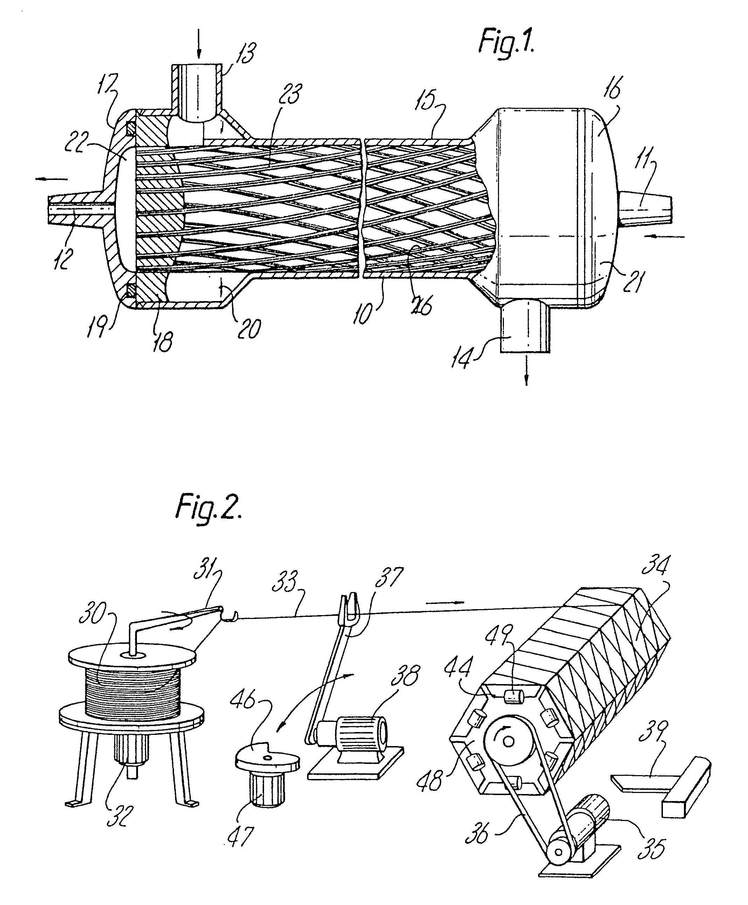

La fig. 1 représente un hémodialyseur comportant une enveloppe allongée (10) munie respectivement d'orifices (11) et (12) pour l'entrée et la sortie du sang et (13) et (14) pour l'entrée et la sortie du liquide de dialyse. Cette enveloppe allongée est constituée d'une coquille cylindrique de révolution (15) en matériau thermoplastique, par exemple en polycarbonate, aux extrémités de laquelle sont soudés aux ultra-sons deux embouts (16) et (17).

A l'intérieur de l'enveloppe (10) repose un faisceau (16) de fibres creuses constituant une forme avantageuse de membranes semi-perméables de tous types connus, utilisés en hémodialyse et hémofiltration.

Ces fibres creuses ont des directions générales sensiblement rectilignes, qui autorisent toutefois quelques ondulations, sont ouvertes à leurs extrémités et sont scellées à proximité de celles-ci, entre elles et aux parois de la coquille (15) par une résine polymérisable (18) telle qu'un composé époxy et/ou polyuréthane. L'appareil est ainsi divisé en un compartiment central (20) parcouru à l'extérieur des fibres creuses par le liquide de dialyse et en deux compartiments (21) et (22), reliés entre eux par des fibres creuses, parcourues intérieurement par le sang. L'étanchéité est complétée par des joints toriques tels que (19). Ces dispositions générales sont bien connues en soi et ne seront donc pas décrites ici plus en détails. La présente invention porte en effet essentiellement sur les dispositions particulières des fibres creuses à l'intérieur du faisceau (16).

Il a été trouvé en effet qu'on peut pratiquement supprimer tout passage préférentiel de liquide de dialyse à l'extérieur des fibres creuses, obtenir un écoulement actif et uniformément réparti du liquide de dialyse autour des fibres creuses sur la majeure partie de leur surface extérieure, si l'on constitue un faisceau de fibres creuses légèrement entrecroisées, sans direction privilégiée, c'est-à-dire à l'intérieur d'une nappe de fibres creuses que l'on roule autour d'elle-même en spirale, parallèlement à l'axe longitudinal de l'appareil. Pratiquement les fibres creuses sont entrecroisées sous des angles alpha compris dans l'intervalle ouvert: 1°–5° par rapport à l'axe longitudinal du faisceau.

Si les fibres creuses sont inclinées avec un angle alpha inférieur ou égal à 1°, on constate qu'elles ne forment pas une couche homogène apte à être roulée régulièrement en spirale, mais qu'elles ont au contraire tendance à se placer irrégulièrement, parallèlement à elles-mêmes.

Si à l'inverse, les fibres creuses forment un angle alpha supérieur ou égal à 5°, on constate qu'elles se prêtent très mal à être roulées en spirale, en particulier elles tendent à se désolidariser de la nappe, notamment sur les bords.

Selon une caractéristique particulière de la présente invention, on peut former des faisceaux (16) de fibres creuses, soit à partir d'une seule fibre creuse, soit à partir d'un faisceau élémentaire (23) de plusieurs fibres creuses traitées simultanément. Il est en effet avantageux, pour des raisons de productivité, de produire simultanément et/ou de rassembler n fibres creuses identiques, n étant généralement compris entre 2 et 40 et de préférence entre 4 et 20. Ces n fibres creuses peuvent provenir d'une bobine d'alimentation, soit approvisionnée directement depuis une installation de fabrication simultanée d'une pluralité de fibres creuses, soit provenant d'une zone de stockage.

Chaque faisceau élémentaire (23) est constitué d'une pluralité de fibres creuses qui peuvent être soit contiguës mais indépendantes les unes des autres, soit liées les unes aux autres. Dans ce dernier cas, les fibres creuses peuvent être câblées, tressées ou torsadées entre elles, avec ou sans torsion sur elles-mêmes. On peut dans ce but avantageusement utiliser les moyens décrits dans les brevets américains numéros 3 963 622 et 4 246 120. Selon la présente invention, chaque faisceau élémentaire (23) est, une fois constitué, traité comme une fibre creuse unique. En particulier les faisceaux élémentaires (23) sont croisés entre eux selon des angles alpha compris 1°–5° par rapport à l'axe longitudinal du faisceau (16).

Les fibres creuses ou les faisceaux élémentaires (23) de fibres creuses sont entrecroisées alors qu'ils forment une nappe (40) de fibres creuses située sensiblement dans un plan. Le fait de rouler cette nappe sur elle-même en spirales (24) donne des fibres creuses initialement légèrement entrecroisées dans un plan des inclinaisons qui restent toujours comprises dans l'intervalle ouvert: 1°–5° par rapport à l'axe du faisceau (16). De plus, ces fibres creuses, ou faisceaux élémentaires (23) de fibres creuses, ne restent plus orientées dans diverses directions à l'intérieur du plan initial ou dans des plans parallèles, mais sont orientées dans tout plan tangent à la spirale décrite par la nappe (40).

Il en résulte de nouvelles structures de faisceaux de fibres creuses. Le foisonnement de fibres creuses obtenu est sensiblement de révolution et relativement anisotrope, notamment par rapport à l'emplacement des orifices d'entrée et de sortie du liquide de dialyse. D'autant plus que l'on constate généralement une relative interpénétration des fibres creuses (ou des faisceaux élémentaires 23) d'une couche spiralée dans une couche adjacente. Tout passage préférentiel est ainsi évité à l'intérieur du faisceau (16).

On évite également tout passage préférentiel d'une part au sein du faisceau (16), d'autre part entre celui-ci et le dispositif de contention (15) si l'on donne au faisceau (16) une compacité suffisante.

On peut exprimer cette compacité par le rapport de la somme des sections droites de toutes les fibres creuses du faisceau, calculées sur leur diamètre extérieur à la section droite disponible à l'intérieur du dispositif de contention (15). Ce rapport est généralement compris entre 0,4 et 0,9 et de préférence entre 0,6 et 0,7.

Pour atteindre ce résultat il est le plus souvent nécessaire de comprimer latéralement le faisceau (16) de fibres creuses avant de l'introduire dans le dispositif de contention (15). Le faisceau de fibres creuses selon l'invention présente en effet en l'absence de contraintes latérales un diamètre moyen supérieur au diamètre intérieur du dispositif de contention destiné à le recevoir. Le faisceau selon l'invention doit donc pouvoir être comprimé sans que les fibres soient écrasées. Il est donc généralement élastique. Le rapport du diamètre moyen du faisceau en l'absence de contraintes latérales au diamètre interne de la coquille de contention destiné à le recevoir est généralement compris entre 1 et 1,5 et de préférence entre 1,1 et 1,3.

Avantageusement, selon l'invention, on forme un faisceau cylindrique de fibres creuses de base circulaire et de compacité homogène. Cf. la fig. 5. Pour cela on réduit progressivement en biseau sur une distance d l'épaisseur de la nappe de fibres creuses à son extrémité extérieure lorsqu'elle est roulée en spirale, de façon que l'ensemble formé par la nappe spiralée s'inscrive naturellement à l'intérieur d'un cercle, sans que l'on ait localement à en modifier la compacité ou à déranger l'ordonnancement des fibres creuses entrecroisées.

Les fibres creuses semi-perméables permettant la mise en œuvre de la présente invention peuvent être de divers types connus utilisés dans les traitements du sang, notamment par hémodialyse et hémofiltration. Des fibres creuses en copolymères d'acrylonitrile conviennent particulièrement bien. Ces fibres creuses ont un diamètre extérieur généralement compris entre 50 et 2000 μm et de préférence entre 100 et 500 μm. L'épaisseur de paroi est généralement comprise entre 5 et 200 μm et de préférence entre 10 et 80 μm. Avantageusement les fibres creuses, utilisables selon la présente invention sont relativement flexibles, souples et élastiques, afin de pouvoir prendre appui les unes sur les autres et plier légèrement sans s'obturer.

Le module d'élasticité de fibres creuses utilisables selon l'invention est avantageusement compris entre 100 et 500 mégapascals. A titre d'exemple le module d'élaticité d'une fibre creuse en copolymères d'acrylonitrile utilisée préférablement pour la fabrication d'un appareil selon l'invention est de 220 mégapascals.

Divers types de fibres creuses sont au moins superficiellement à l'état humide et/ou plastifié, par exemple imprégnées d'eau et/ou de glycérine, notamment pour conserver leurs propriétés de perméabilité ainsi que leurs caractéristiques mécaniques. On a observé que de telles fibres creuses présentent une cohésion qui facilite la formation de nappes en spirale.

On constitue ainsi à l'aide de ces fibres creuses deux séries de chacune 6 faisceaux comprenant dans chaque unité 6000 fibres de surface totale active de 1,14 m² et de diamètres externe/interne: 390/290 μm. On introduit chaque faisceau dans un dispositif de contention classique pour constituer un hémodialyseur. Ces deux séries d'hémodialyseurs ne diffèrent que par la structure du faisceau. Dans la première série, les hémodialyseurs témoins sont constitués de façon connue par un faisceau de fibres sensiblement parallèles. Dans la deuxième série, les hémodialyseurs sont constitués de fibres creuses identiques, mais entrecroisées et roulées en spirales selon l'invention.

Dans des conditions identiques (Essais in vitro: débit sang: 200 ml/min, débit liquide de dialyse: 500 ml/min, on observe un taux moyen d'épuration de l'urée (clairance) de:

– 170,7 pour les hémodialyseurs selon l'invention, contre:
– 153,3 pour les hémodialyseurs témoins.

Soit une amélioration voisine de 10%.

Mais on note surtout que l'écart-type de performance d'un hémodialyseur à l'autre est, pour un indice de probabilité de 95%, ramené de 14,5 (hémodialyseurs témoins) à 3,2 (hémodialyseurs selon l'invention). On constate donc une remarquable amélioration de la régularité des performances et donc de la fiabilité de ce type d'appareil.

Pour fabriquer un faisceau de fibres creuses tel que décrit ci-avant, on procède selon l'invention de la manière suivante, en se référant notamment à la fig. 2.

On dévide depuis une bobine (30) par exemple fixe, à l'aide d'un dévidoir rotatif (31) éventuellement entraîné à vitesse constante par un groupe motoréducteur (32) une fibre creuse (33) que l'on enroule autour de la surface latérale d'un tambour (34) entraîné en rotation à vitesse constante par un motoréducteur de vitesse (35) et des moyens classiques de transmission tels que poulies et courroie (36), autour d'un axe sensiblement perpendiculaire à la position moyenne de la fibre creuse (33) entre la bobine d'alimentation (30) et le tambour (34).

En effet, cette fibre creuse (33) est dirigée sur le tambour et guidée latéralement, alternativement d'une extrémité vers l'autre de ce tambour, à vitesse transversale constante, à l'aide d'un dispositif de trancannage (37) mû par un motoréducteur (38). On règle la vitesse du motoréducteur (38) par rapport à celle du motoréducteur (35) de sorte que la fibre creuse (33) forme en se déposant sur le tambour (34) avec un plan perpendiculaire à l'axe du tambour un angle alpha sensiblement constant, compris dans l'intervalle ouvert: 1°–5°.

On forme ainsi sur le tambour (34) une première couche de fibres creuses en guidant la fibre creuse par exemple de gauche à droite, puis une deuxième couche qui vient se placer sur la précédente, en la guidant de droite à gauche. Les fibres creuses de ces deux couches se croisent donc régulièrement et symétriquement par rapport à un plan perpendiculaire à l'axe du tambour. On procède ainsi au dépôt du nombre voulu de couches successives de fibres creuses sur le tambour (34).

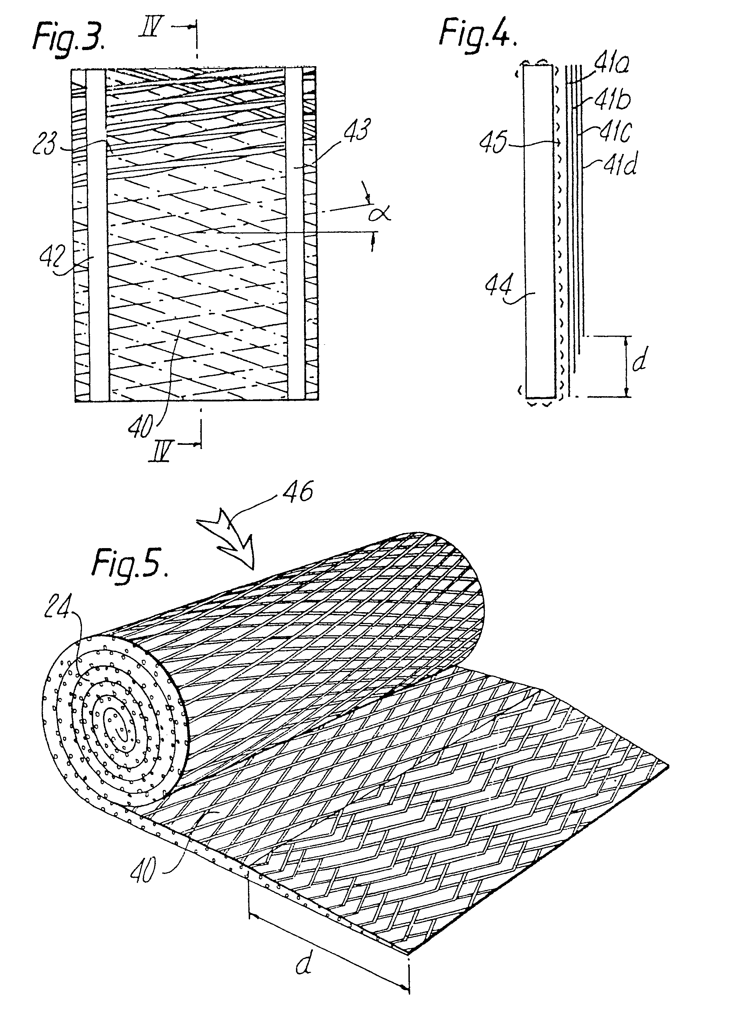

On arrête alors le mouvement du tambour et l'on procède à l'aide du couteau (39) à la coupe des fibres creuses disposées sur le tambour, selon des plans parallèles à l'axe du tambour et à des intervalles réguliers correspondant sensiblement à la longueur désirée pour les faisceaux de fibres creuses. On obtient ainsi une série de nappes (40) de fibres creuses telles que celle représentée par fig. 3. Chaque nappe est donc constituée par la superposition de plusieurs couches (41) de fibres creuses entrecroisées, représentées schématiquement en coupe fig. 4. Chaque nappe (40) a une forme générale sensiblement plane et rectangulaire. Elle comprend la quantité prévue de fibres creuses constituant chaque faisceau. Par exemple un faisceau de fibres creuses de surface utile S = 1 m² peut être formé à partir d'une nappe de 5000 fibres creuses de diamètre extérieur unitaire 400 µm, de longueur 23 cm, disposées selon des couches successives s'étendant chacune sur une même longueur de 55 cm.

Il peut être commode de maintenir au moins provisoirement en place les fibres creuses constituant chaque nappe sur son support, par exemple en disposant des bandes élastiques telles que (42) et (43), adhésives ou non, fixées par exemple à leurs extrémités sur le support de la nappe et immobilisant les fibres creuses le long de leurs extrémités ouvertes.

On peut ensuite procéder à l'enroulement en spirale sur elle-même de la nappe de fibres creuses, de sorte que le faisceau ainsi constitué soit composé de fibres creuses ouvertes à leurs deux extrémités. On procède ainsi par tous moyens connues, manuels, schématisés par la flèche 46, ou mécaniques. Avantageusement on solidarise au préalable les fibres creuses sur les bords par collage, couture, guidage ou tout moyen équivalent.

Il est avantageux que les fibres creuses généralement humides n'adhèrent que très peu à leur support (44) constitué par exemple par une plaque métallique. On peut parvenir à des résultats satisfaisants par l'emploi de divers moyens tels que des plaques perforées, grillagées, ou couvertes d'un treillis plastique (45) fixé sur la plaque support (44), pour éviter la formation d'un film liquide et pour réduire les forces capillaires.

La nappe de fibres creuses est ainsi entièrement roulée sur elle-même en spirale et constitue un faisceau de forme sensiblement cylindrique. On comprime alors celui-ci latéralement pour pouvoir l'introduire dans le dispositif de contention (15) faisant partie de l'appareil avec lequel on l'utilisera.

Avantageusement on enroule un film thermoplastique autour du faisceau, on introduit l'ensemble dans le dispositif de contention et l'on retire ensuite éventuellement le film thermoplastique, ce qui permet de manipuler aisément le faisceau sans endommager de fibres creuses.

Le procédé selon l'invention, décrit dans le cas d'une seule fibre creuse, peut être avantageusement mis en œuvre dans des conditions analogues à partir d'une pluralité de fibres creuses, qu'elles proviennent d'une même bobine (30) ou de plusieurs bobines semblables disposées en parallèle. Comme on l'a vu précédemment, en réunissant ainsi plusieurs fibres creuses, en parallèle, on peut former un faisceau élémentaire comprenant en général de 2 à 40 fibres creuses et de préférence de 4 à 20 fibres creuses. Avantageusement on peut procéder au torsadage entre elles des fibres creuses composant un faisceau élémentaire, avant d'enrouler celui-ci sur le tambour (34).

Selon un mode de réalisation préféré du procédé selon l'invention, on réduit progressivement en biseau sur une distance d l'épaisseur de la nappe de fibres creuses à l'extrémité extérieure lorsqu'elle est roulée en spirale, pour obtenir un faisceau cylindrique de fibres creuses, de compacité homogène.

Dans ce but on utilise des moyens pour réduire progressivement d'un côté la portée du débattement latéral du dispositif de trancannage. Comme moyen on peut utiliser par exemple une came (46) entraînée par un groupe motoréducteur (47) qui effectue un tour sur elle-même, à vitesse constante, pendant le chargement complet en fibres creuses du tambour (34).

Le profil de la came (46) est déterminé de telle sorte qu'elle limite progressivement d'un côté seulement la course latérale du dispositif de trancannage (37) qui guide la fibre creuse (33) ou le faisceau élémentaire correspondant. Périodiquement le dispositif de trancannage (37) arrive ainsi en butée contre la came (46) puis repart aussitôt en sens inverse à la même vitesse. On voit fig. 4, que l'on obtient ainsi plusieurs couches (41a, 41b, 41c, 41d) de fibres creuses qui, vers une extrémité de la plaque support (44), sont en retrait les unes par rapport aux autres. Le profil de la came permet de régler le nombre de couches de fibres creuses concernées et la profondeur du retrait maximum, nécessaire pour obtenir un faisceau cylindrique de compacité homogène.

Les moyens mis en œuvre selon la présente invention sont essentiellement les suivants:

a) Des moyens d'alimentation d'une seule ou d'une pluralité de fibres creuses, ces moyens comprenant des bobines approvisionnées directement ou non depuis au moins une installation de fabrication de fibres creuses uniques ou multiples, généralement de 2 à 40 fibres creuses et de préférence de 4 à 20 fibres creuses. Un dispositif de dévidoirs mécanisés peut faciliter la reprise de la ou des fibres creuses. Le cas échéant on peut utiliser un dispositif de type connu en soi de câblage, de tressage ou de torsadage de fibres creuses.

b) Un tambour cylindrique (34) avec des moyens d'entraînement en rotation à vitesse constante (35, 36). Ce tambour peut avoir une base circulaire, notamment en cas de grand diamètre, mais il a de préférence une base polygonale régulière de p côtés, p étant généralement compris entre 1 et 30 et correspondant au nombre de faisceaux (16) de fibres creuses pouvant être fabriqués simultanément à partir d'un même tambour. En pratique le tambour (34) comporte généralement à chaque extrémité un flasque polygonal tel que (48) de p côtés égaux (p = 6 côtés sur la fig. 2) solidaire de l'arbre de rotation du tambour. Sur chacun des côtés correspondant des flasques repose une plaque support de préférence plane telle que (44), fixée sur chaque flasque au moyen de verrous tels que (49). Ces plaques supports (44) peuvent être soit indépendantes les unes des autres, soit articulées entre elles pour faciliter leur manutention. Avantageusement les plaques supports (44) comportant des moyens réduisant sensiblement l'adhérence des fibres creuses à leur contact, par exemple elles sont perforées, gaufrées ou couvertes d'un treillis de fils plastiques (45).

c) Un dispositif de trancannage (37) pour guider latéralement la fibre creuse (33) ou le faisceau élémentaire de fibres creuses correspondant sur le tambour (34). Ce dispositif est animé d'un mouvement alternatif à vitesse constante de type connu en soi comprenant notamment un groupe motoréducteur (38). Le rapport des vitesses d'entraînement du dispositif de trancannage à celui du tambour est tel que les fibres creuses s'enroulent sur le tambour en formant un angle alpha compris dans l'intervalle ouvert: 1°–5° par rapport à un plan perpendiculaire à l'axe du tambour.

Préférentiellement, comme on l'a vu précédemment, un dispositif de came (46) peut limiter d'un côté, selon un programme prédéterminé, le débattement latéral du dispositif de trancannage.

d) Des moyens de coupe (39) des fibres creuses sur le tambour. Ces moyens sont constitués par exemple par une lame microtome pouvant se déplacer parallèlement à l'axe du tambour (34) pour couper les fibres creuses parallèlement à cet axe, sur toute la longueur du tambour. Préférentiellement la coupe s'effectue entre deux plaques supports (44), aux environs de chacun de p sommets d'un flasque tel que (48).

e) Des moyens (42, 43) pour maintenir au moins provisoirement les fibres creuses, ou faisceaux élémentaires de fibres creuses, vers leurs extrémités sur les supports (44), avant de procéder à leur mise en spirale. Ces moyens peuvent être constitués par exemple de bandes de préférence élastiques, passées sur les fibres creuses et autour des plaques supports (44).

f) Des moyens de types connus en soi, mécaniques ou manuels, pour rouler en spirale sur elles-mêmes les nappes de fibres creuses et former ainsi des faisceaux de compacité homogènes de fibres creuses, ouvertes à leurs deux extrémités.

De nombreuses variantes de réalisation apparaîtront au technicien sans pour autant sortir du cadre de la présente invention. Par exemple l'appareil selon l'invention peut comprendre plusieurs faisceaux semblables à (16), juxtaposés côte à côte dans un même boîtier de contention. La présente invention permet une fabrication simple, fiable et économique d'appareils présentant des performances excellentes avec une grande régularité. Ces appareils sont utilisés, outre comme hémodialyseurs et/ou ultrafiltres à sang, avantageusement pour le traitement du sang, notamment comme oxygénateurs, hémofiltres ou appareils de plasmaphérèse.

## Revendications

1. Appareil, notamment pour le traitement de sang, comportant à l'intérieur d'une enveloppe allongée (10) munie d'orifices d'entrée (11, 13) et de sortie (12, 14), respectivement pour le sang et pour un fluide auxiliaire, au moins un faisceau (16) de fibres creuses sélectivement perméables, sensiblement rectilignes, ouvertes à leurs extrémités, scellées de manière étanche vers chacune de leurs extrémités dans des zones délimitant à l'intérieur de ladite enveloppe un compartiment central (20) parcouru à l'extérieur des fibres creuses par ledit fluide auxiliaire et deux compartiments latéraux (21, 22) reliés entre eux par les fibres creuses parcourues intérieurement par le sang, ledit faisceau étant constitué seulement de fibres creuses entrecroisées entre elles à l'intérieur d'une nappe roulée en spirale sur elle-même autour d'un axe longitudinal, caractérisé en ce que lesdites fibres creuses sont entrecroisées selon des angles alpha compris dans l'intervalle ouvert: 1°–5°, par rapport audit axe longitudinal.

2. Appareil selon la revendication 1, dans lequel ledit faisceau (16) de fibres creuses comprend une pluralité de faisceaux élémentaires (23) constitués chacun de 2 à 40 fibres creuses, caractérisé en ce que lesdits faisceaux élémentaires (23) sont constitués de fibres creuses torsadées entre elles.

3. Appareil selon l'une quelconque des revendications précédentes, caractérisé en ce que ledit faisceau (16) est formé d'une nappe de fibres creuses comprenant plusieurs couches de fibres creuses superposées de longueurs régulièrement décroissantes vers une extrémité de manière à ce que, roulée sur elle-même en spirale, elle offre un volume de fibres creuses de compacité homogène cylindrique, de base circulaire.

4. Appareil selon l'une quelconque des revendications précédentes, caractérisé en ce que lesdites fibres creuses sont en copolymères d'acrylonitrile.

5. Appareil selon l'une quelconque des revendications précédentes, caractérisé en ce que lesdites fibres creuses ont un module d'élasticité compris entre 100 et 500 mégapascals.

6. Appareil selon l'une quelconque des revendications précédentes, caractérisé en ce que lesdites fibres creuses sont humides et/ou plastifiées.

7. Faisceau de fibres creuses destiné à équiper l'un au moins des appareils selon l'une quelconque des revendications 1 à 6.

8. Procédé de fabrication d'un faisceau de fibres creuses utilisable dans un appareil selon l'une quelconque des revendications 1 à 6, dans lequel on effectue les opérations suivantes:

a) On dévide depuis au moins une bobine (30) au moins une fibre creuse (33) sur un tambour (34), alternativement vers chaque extrémité dudit tambour, à l'aide d'un dispositif de trancannage (37, 38), les fibres creuses formant ainsi des couches (41) successives et s'entrecroisant d'une couche à l'autre en formant avec un plan perpendiculaire à l'axe dudit tambour un angle alpha compris dans l'intervalle ouvert: 1°–5°;

b) On coupe les fibres creuses selon des plans longitudinaux parallèles à l'axe du tambour, à des intervalles réguliers correspondant sensiblement à la longueur des faisceaux désirés et l'on forme ainsi une pluralité de nappes (40) de fibres creuses entrecroisées, sensiblement planes, ouvertes à leurs deux extrémités; caractérisé en ce que l'on roule en spirale, sur elle-même, selon une direction longitudinale, chacune desdites nappes (40) de fibres creuses entrecroisées pour former autant de faisceaux de fibres creuses qui restent entrecroisées sous des angles compris dans l'intervalle ouvert: 1°–5° avec l'axe dudit faisceau, et ouvertes aux deux extrémités du faisceau.

9. Procédé selon la revendication 8, dans lequel on forme préalablement un faisceau élémentaire (23) de 2 à 40 fibres creuses, caractérisé en ce que l'on procède au torsadage entre elles desdites fibres creuses avant d'enrouler lesdits faisceaux élémentaires (23) sur ledit tambour.

10. Procédé selon l'une quelconque des revendications 8 à 9, caractérisé en ce que l'on réduit progressivement d'un côté la portée du débattement latéral du dispositif de trancannage (37, 38).

11. Appareillage pour la mise en œuvre du procédé selon la revendication 8, comprenant en combinaison:

a) des moyens d'alimentation (30, 31) d'au moins une fibre creuse;

b) un tambour cylindrique (34) à base circulaire ou de préférence polygonale à p côtés, p étant compris entre 1 et 30, et des moyens d'entraînement (35, 36) à vitesse de rotation constante dudit tambour;

c) un dispositif de trancannage (37, 38) à vitesse constante pour guider latéralement ladite fibre creuse depuis lesdits moyens d'alimentation sur ledit tambour, le rapport des vitesses d'entraînement du dispositif de trancannage à celui dudit tambour étant tel que les fibres creuses s'enroulent sur ledit tambour en formant un angle alpha compris dans l'intervalle ouvert: 1°–5° par rapport à un plan perpendiculare à l'axe dudit tambour;

d) des moyens (39) pour couper ladite fibre creuse selon des plans parallèles à l'axe dudit tambour, à intervalles réguliers, de préférence aux p sommets de ladite base polygonale.

e) des moyens (42, 43) pour maintenir au moins provisoirement les extrémités coupées des fibres creuses sur leurs supports caractérisé en ce qu'il comprend en outre:

des moyens (46) pour rouler en spirale sur elles-mêmes lesdites nappes (40) de fibres creuses et pour former un faisceau (16) de compacité homogène de fibres creuses qui restent entrecroisées sous des angles compris dans l'intervalle ouvert: 1°–5° avec l'axe dudit faisceau et ouvertes aux deux extrémités dudit faisceau.

12. Appareillage selon la revendication 11, dans lequel ledit tambour (34) a une base constituée de flasques polygonaux à p côtés, une plaque support (44) de fibres creuses plane reliant chacun des côtés homologues des deux flasques au moyen de dispositifs de verrouillage (49), caractérisé en ce que lesdites plaques supports (44) comportent des moyens réduisant sensiblement l'adhérence des fibres creuses à leur surface de contact.

13. Appareillage selon l'une quelconque des revendications 11 ou 12, caractérisé en ce qu'il comprend en outre des moyens de torsadage entre elles des fibres creuses constituant un faisceau élémentaire (23) de 2 à 40 fibres creuses.

14. Appareillage selon l'une quelconque des revendications 11 à 13, caractérisé en ce qu'il comprend en outre des moyens (46, 47) pour réduire progressivement d'un côté la portée du débattement latéral dudit dispositif de trancannage (37, 38).

**Claims**

1. An apparatus, for the treatment of blood in particular, comprising inside an elongate envelope (10) provided with inlet openings (11, 13) and outlet openings (12, 14) for the blood and for an auxiliary fluid respectively, at least one bundle (16) of substantially rectilinear, selectively permeable hollow fibres, open at their ends, sealed in a leakproof manner towards each one of their ends in zones delimiting inside the said envelope, a central compartment (20) traversed outside the hollow fibres by the said auxiliary liquid and two lateral compartments (21, 22) interconnected by the hollow fibres internally traversed by the blood, the said bundles being solely constituted by hollow fibres intersecting each other within a web rolled up into a spiral on itself around a longitudinal axis, characterised in that the said hollow fibres are intersected according to angles alpha comprised in the open range of 1°–5° in relation to the said longitudinal axis.

2. An apparatus according to Claim 1 wherein the said bundle (16) of hollow fibres comprises a plurality of elementary bundles (23) each constituted by 2 to 40 hollow fibres, characterised in that the said elementary bundles (23) are constituted by hollow fibres which are twisted together.

3. An apparatus according to any one of the preceding Claims, characterised in that the said bundle (16) is formed by a web of hollow fibres comprising several layers of superposed hollow fibres with lengths uniformly decreasing towards one end so that, when rolled on to itself into a spiral, it presents a hollow fibre volume of homogeneous cylindrical compactness, with a circular base.

4. An apparatus according to any one of the preceding Claims, characterised in that the said hollow fibres are made of acrylonitrile copolymers.

5. An apparatus according to any one of the preceding Claims, characterised in that the said hollow fibres have a modulus of elasticity comprised between 100 and 500 megapascals.

6. An apparatus according to any one of the preceding Claims, characterised in that the said hollow fibres are moist and/or plasticised.

7. A bundle of hollow fibres intended to equip at least one of the apparatuses according to any one of Claims 1 to 6.

8. A method for making a bundle of hollow fibres which can be used in an apparatus according to any one of Claims 1 to 6 wherein the following operations are effected:

a) At least one hollow fibre (33) is unwound from at least one reel (30) on to a drum (34) alternately towards each end of the said drum by means of a traversing device (37, 38), the hollow fibres thus forming successive layers (41) and crossing each other from one layer to another forming with a plane perpendicular to the axis of the said drum, an angle alpha comprised in the open range of 1°–5°.

b) The hollow fibres are cut along longitudinal planes parallel to the drum axis at regular intervals substantially corresponding to the length of the desired bundles and one thus forms a plurality of webs (40) of substantially flat, intersected hollow fibres which are open at their two ends; characterised in that one rolls up into a spiral on itself, along a longitudinal direction, each one of the said webs (40) of the hollow intersected fibres to form as many hollow fibre bundles which remain intersected with angles comprised in the open range of 1°–5° with the axis of the said bundle and open at the two ends of the bundle.

9. A method according to Claim 8 wherein an elementary bundle (23) of 2 to 40 hollow fibres is formed beforehand, characterised in that one proceeds to the twisting together of the said hollow fibres before the said elementary bundles (23) are wound up on the said drum.

10. A method according to any one of Claims 8 to 9, characterised in that the extent of the lateral displacement of the traversing device (37, 38) is progressively reduced on one side.

11. Equipment for implementing the method according to Claim 8, comprising in combination:

a) means (30, 31) of feeding at least one hollow fibre;

b) a cylindrical drum (34) with a circular base or preferably a polygonal one with p sides, p being comprised between 1 and 30, and means (35, 36) for driving the said drum at a constant speed of rotation;

c) a constant speed traversing device (37, 38) for guiding the said hollow fibre laterally from the said feeding means on to the said drum, the ratio of the driving speed of the traversing device to that of the said drum being such that the hollow fibres are wound up on the said drum forming an angle alpha comprised in the open range of 1°–5° in relation to a perpendicular plane to the axis of the said drum;

d) means (39) for cutting the said hollow fibre along planes parallel to the axis of the said drum at regular intervals, preferably at the p apices of the said polygonal base;

e) means (42, 43) for holding the cut ends of the hollow fibres at least temporarily on their supports, characterised in that it does moreover comprise:

means (46) for rolling up into a spiral the said webs (40) of hollow fibres on to themselves and for forming a bundle (16) of a homogeneous compactness of hollow fibres which remain intersected within angles comprised in the open range of 1°–5° with the axis of the said bundle and open at the two ends of the said bundle.

12. Equipment according to Claim 11 wherein the said drum (34) has a base constituted by polygonal end plates with p sides connecting each one of the homologous sides of the two end plates by means of bolting devices (49), characterised in that the said support plates (44) comprise means which substantially reduce the adhesion of the hollow fibres at their contact surface.

13. Equipment according to any one of Claims 11 or 12, characterised in that it does, moreover, comprise means for twisting the hollow fibres together, constituting an elementary bundle (23) of 2 to 40 hollow fibres.

14. Equipment according to any one of Claims 11 to 13, characterised in that it does, moreover, comprise means (46, 47) for progressively reducing the extent of the lateral displacement of the said traversing device (37, 38) on one side.

**Patentansprüche**

1. Vorrichtung insbesondere zur Behandlung von Blut, umfassend im Inneren eines länglichen Gehäuses (10), das mit Eintrittsöffnungen (11, 13) und Austrittsöffnungen (12, 14) für das Blut bzw. für eine Hilfsflüssigkeit versehen ist, wenigstens ein Bündel (16) von selektiv permeablen Hohlfasern, die im wesentlichen geradlinig, an ihren äusseren Enden offen sind und gegen jedes ihrer äusseren Enden dicht verschlossen sind in Zonen, die im Inneren des Gehäuses einen zentralen Raum (20) begrenzen, der ausserhalb der Hohlfasern von dieser Hilfsflüssigkeit durchlaufen wird und zwei seitlichen Räumen (21, 22), die untereinander durch die Hohlfasern verbunden sind, die im Innern von Blut durchlaufen sind, wobei dieses Bündel nur aus Hohlfasern besteht, die untereinander im Innern eines Vlieses verflochten sind, das um eine Längsachse herum spiralförmig aufgerollt ist, dadurch gekennzeichnet, dass sich diese Hohlfasern entsprechend Winkeln Alpha überkreuzen, die im offenen Intervall 1°–5° bezüglich der Längsachse umfassen.

2. Vorrichtung gemäss Anspruch 1, wobei das Bündel (16) von Hohlfasern eine Vielzahl von Elementarbündeln (23) umfasst, die jeweils aus 2 bis 40 Hohlfasern bestehen, dadurch gekennzeichnet, dass diese Elementarbündel (23) aus untereinander verdrillten Hohlfasern bestehen.

3. Vorrichtung gemäss einem der vorhergehenden Ansprüche, dadurch gekennzeichnet, dass das Bündel (16) aus einem Vlies von Hohlfasern gebildet ist, das mehrere Schichten von übereinander liegenden Hohlfasern umfasst mit Längen, die gegen ein äusseres Ende gleichmässig abnehmen derart, dass es, wenn es auf sich selbst spiralig aufgerollt ist, ein Volumen von Hohlfasern mit zylindrischer homogener Dichtigkeit und kreisförmiger Grundfläche darstellt.

4. Vorrichtung gemäss einem der vorhergehenden Ansprüche, dadurch gekennzeichnet, dass die Hohlfasern aus Acrylnitrilcopolymeren sind.

5. Vorrichtung gemäss einem der vorhergehenden Ansprüche, dadurch gekennzeichnet, dass die Hohlfasern ein Elastizitätsmodul zwischen 100 und 500 Megapascal haben.

6. Vorrichtung gemäss einem der vorhergehenden Ansprüche, dadurch gekennzeichnet, dass die Hohlfasern feucht und/oder weichgemacht sind.

7. Bündel aus Hohlfasern, bestimmt zur Ausstattung wenigstens einer der Vorrichtungen gemäss einem der Ansprüche 1 bis 6.

8. Verfahren zur Herstellung eines Bündels von Hohlfasern, das in einer Vorrichtung gemäss einem der Ansprüche 1 bis 6 verwendbar ist, wobei man die folgenden Arbeitsgänge durchführt:

a) Man wickelt von wenigstens einer Spule (30) wenigstens eine Hohlfaser (33) auf eine Trommel (34) abwechselnd gegen jedes äussere Ende dieser Trommel mittels einer Fadenführungsvorrichtung (37, 38), wobei die Hohlfasern so aufeinanderfolgende Schichten (41) bilden und sich von einer Schicht zur anderen überschneiden, indem sie mit einer Ebene, die zu der Achse der Trommel senkrecht ist, einen Winkel Alpha bilden, der im offenen Intervall 1°–5° umfasst;

b) man schneidet die Hohlfasern entlang Längsebenen, die zur Achse der Trommel parallel sind, in regelmässigen Intervallen, die im wesentlichen der Länge der gewünschten Bündel entsprechen, und man bildet so eine Vielzahl von Vliesen (40) aus sich überschneidenden Hohlfasern, die im wesentlichen eben sind und an ihren beiden äusseren Enden offen sind; dadurch gekennzeichnet, dass man jede der Vliese (40) aus verflochtenen Hohlfasern spiralig auf sich selbst in Längsrichtung aufrollt, um so viele Hohlfaserbündel zu bilden, die unter Winkeln Alpha im offenen Intervall von 1°–5° mit der Achse dieses Bündels überkreuzt bleiben und an beiden äusseren Enden des Bündels offenbleiben.

9. Verfahren gemäss Anspruch 8, wobei man vorher ein Elementarbündel (23) von 2 bis 40 Hohlfasern bildet, dadurch gekennzeichnet, dass man eine Verdrillung zwischen diesen Hohlfasern vornimmt, bevor diese Elementarbündel (23) auf die Trommel aufgerollt werden.

10. Verfahren gemäss einem der Ansprüche 8 bis 9, dadurch gekennzeichnet, dass man die Wirkungsbreite des seitlichen Ausschlags der Fadenführungsvorrichtung (37, 38) von einer Seite fortschreitend vermindert.

11. Vorrichtung zur Durchführung des Verfahrens gemäss Anspruch 8, umfassend in Kombination:

a) Mittel zur Zuführung (30, 31) wenigstens einer Hohlfaser;

b) eine zylindrische Trommel (34) mit kreisförmiger oder vorzugsweise polygonaler Grundfläche mit p Seiten, wobei p zwischen 1 und 30 liegt, und Antriebsmittel (35, 36) mit konstanter Drehgeschwindigkeit für die Trommel;

c) eine Fadenführungsvorrichtung (37, 38) mit konstanter Geschwindigkeit, um die Hohlfaser von den Zuführungsmitteln auf die Trommel seitlich zu führen, wobei das Verhältnis der Antriebsgeschwindigkeiten der Fadenführungsvorrichtung zu derjenigen der Trommel derart ist, dass die Hohlfasern sich auf der Trommel aufwickeln unter Bildung eines Winkels Alpha, umfassend im offenen Intervall 1°–5° in bezug auf eine Ebene, die senkrecht zur Achse der Trommel ist;

d) Mittel (39) zum Schneiden der Hohlfaser entlang Ebenen, die parallel zur Achse der Trommel sind, in regelmässigen Intervallen, vorzugsweise an p Ecken der polygonalen Grundfläche;

e) Mittel (42, 43), um die geschnittenen Enden der Hohlfasern wenigstens provisorisch auf den Unterlagen festzuhalten, dadurch gekennzeichnet, dass sie ausserdem umfasst:
Mittel (46), um die Vliese (40) aus Hohlfasern auf sich selbst spiralförmig aufzurollen und um ein Bündel (16) von Hohlfasern mit homogener Dichtigkeit zu bilden, die unter Winkeln im offenen Intervall 1°–5° mit der Achse dieses Bündels überkreuzt bleiben und an beiden äusseren Enden des Bündels offen bleiben.

12. Vorrichtung gemäss Anspruch 11, wobei die Trommel (34) eine Grundfläche, bestehend aus polygonalen Seitenwänden mit p Seiten, eine ebene Tragplatte (44) der Hohlfasern, welche jede der homologen Seiten der beiden Seitenwände mittels Verriegelungsvorrichtungen (49) verbindet, dadurch gekennzeichnet, dass die Tragplatten (44) Mittel aufweisen, die das Anhaften der Hohlfasern auf ihrer Kontaktoberfläche wesentlich vermindern.

13. Vorrichtung gemäss einem der Ansprüche 11 oder 12, dadurch gekennzeichnet, dass sie ausserdem Mittel zur Verdrillung der Hohlfasern untereinander, welche ein Elementarbündel (23) von 2 bis 40 Hohlfasern bilden, aufweist.

14. Vorrichtung gemäss einem der Ansprüche 11 bis 13, dadurch gekennzeichnet, dass sie ausserdem Mittel (46, 47) aufweist, um die Spannbreite des seitlichen Ausschlags der Fadenführungsvorrichtung (37, 38) von einer Seite fortschreitend zu vermindern.

Fig.1.

Fig.2.

Fig.3.

IV

23

43

42

α

40

IV

Fig.4.

41a

41b

45

41c

41d

44

d

46

Fig.5.

24

40

d